# EUROPÄISCHE PATENTSCHRIFT

(11) **EP 4 302 585 B1**
(45) Veröffentlichungstag und Bekanntmachung des Hinweises auf die Patenterteilung: **22.07.2026**
(21) Anmeldenummer: 23178027.1
(22) Anmeldetag: 07.06.2023
(51) Int. Cl.: A01C 7/12, A01C 15/04

(54) **DOSIEREINHEIT FÜR PULVER- ODER PARTIKELFÖRMIGES VERTEILGUT UND VERTEILMASCHINE MIT EINER SOLCHEN DOSIEREINHEIT**
DOSING UNIT FOR POWDERY OR PARTICULATE DISTRIBUTION MATERIAL AND DISTRIBUTION MACHINE WITH SUCH A DOSING UNIT
UNITÉ DE DOSAGE POUR PRODUIT À DISTRIBUER EN POUDRE OU EN PARTICULES ET MACHINE DE DISTRIBUTION DOTÉE D'UNE TELLE UNITÉ DE DOSAGE

(30) Priorität: 08.07.2022 DE 202022103848 U
(43) Veröffentlichungstag der Anmeldung: 10.01.2024
(73) Patentinhaber: RAUCH Landmaschinenfabrik GmbH, 77836 Rheinmünster (DE)
(72) Erfinder: KLEIN, Frederic, 67000 Straßbourg (FR); BOOS, Florian, 76547 Sinzheim (DE)
(74) Vertreter: Lichti - Patentanwälte Partnerschaft mbB

(56) Entgegenhaltungen:
- EP-A1- 0 678 233
- EP-B1- 2 786 649
- WO-A1-2017/138867
- DE-A1- 3 337 514
- US-A1- 2018 263 178

## Beschreibung

Die Erfindung betrifft eine Dosiereinheit zur Dosierung von pulver- und/oder partikelförmigem Verteilgut, insbesondere Saatgut und/oder Dünger, für eine Verteilmaschine, umfassend:
- ein Dosiergehäuse mit einem Dosiereinlass und mit einem Dosierauslass sowie mit einem zwischen dem Dosiereinlass und dem Dosierauslass angeordneten Aufnahmeraum zur Aufnahme eines Dosiereinsatzes;
- wenigstens einen Dosiereinsatz mit einem zu dem Aufnahmeraum des Dosiergehäuses komplementären Einsatzgehäuse, in welchem wenigstens ein Dosierrad antriebslos gelagert ist und welches derart in den Aufnahmeraum des Dosiergehäuses einführbar ist, dass ein Einlass des Einsatzgehäuses des Dosiereinsatzes mit dem Dosiereinlass des Dosiergehäuses und ein Auslass des Einsatzgehäuses des Dosiereinsatzes mit dem Dosierauslass des Dosiergehäuses korrespondiert; und
- einen Antriebsmotor, welcher zum Drehantrieb des Dosierrades des Dosiereinsatzes ausgebildet ist, wenn der Dosiereinsatz in den Aufnahmeraum des Dosiergehäuses eingeführt worden ist,
wobei das Einsatzgehäuse des wenigstens einen Dosiereinsatzes einen mit dem Dosierrad zusammenwirkenden Abstreifer aufweist, welcher zwischen dem Dosiereinlass und dem Dosierauslass des Dosiergehäuses angeordnet ist, wenn der Dosiereinsatz in den Aufnahmeraum des Dosiergehäuses eingeführt worden ist.

Die Erfindung bezieht sich ferner auf eine Verteilmaschine, wie z.B. eine Sämaschine oder ein Düngerstreuer, welche mit wenigstens einer solchen Dosiereinheit ausgestattet ist.

Dosiereinheiten zur Dosierung von pulver- und/oder partikelförmigem Verteilgut, wie Saatgut und/oder Dünger, finden insbesondere in landwirtschaftlichen Verteilmaschinen, wie z.B. in Form von pneumatischen Sämaschinen, Drillmaschinen und pneumatischen Düngerstreuern, sogenannten Gebläsestreuern, Verwendung. Solche Verteilmaschinen existieren einerseits in leichter Bauart als Anbaugeräte, welche mit dem Dreipunkt einer Zugmaschine, wie eines Traktors, gekoppelt werden können, anderseits können sie in schwerer Bauart auf einen achsgestützten Nachläufer oder einen Selbstfahrer aufgesetzt sein. Sie umfassen häufig eine Mehrzahl an seitlich nach außen ragenden Auslegern, welche in unterschiedlichem Abstand voneinander endende Verteilerleitungen aufnehmen. Zur Förderung des Verteilgutes dient ein Gebläse, dessen Druckleitung sich an den Dosierauslass einer jeweiligen Dosiereinheit anschließt und in einem Druckverteiler mündet, an welchen sich mehrere Verteilerleitungen anschließen. Zwischen dem Druckverteiler und den Verteilerleitungen angeordnete Injektoren können zur Übergabe des Verteilgutes von den Dosiereinheiten an die Verteilerleitungen dienen, um sicherzustellen, dass jeder Verteilerleitung dieselbe Menge an Streugut aufgegeben wird. Alternativ kann sich an den Dosierauslass einer jeweiligen Dosiereinheit auch nur eine oder mehrere Förderleitung anschließen, welche in einen oder in einen jeweiligen Verteilerkopf führt bzw. führen, von welchem eine Mehrzahl an Verteilerleitungen abgehen, die üblicherweise um den Umfang des Verteilerkopfes verteilt an diesen angeschlossen sind. Das Verteilgut wird schließlich pneumatisch über die nach außen umgelenkten Verteilerleitungen bis zu deren Ende gefördert, wo das Verteilgut auf Verteilorgane, welche üblicherweise von Prallorganen, wie Prallplatten oder andersartigen Prallkörpern, Injektoren, Säscharen oder dergleichen gebildet sind, auftrifft und von dort im Wesentlichen fächerförmig (im Falle von Prallorganen) oder etwa linienförmig (im Falle von Injektoren oder Säscharen) auf dem Boden abgelegt oder auch in eine in dem Boden erzeugte Furche eingebracht wird. Der Hauptvorteil von Pneumatikstreuern gegenüber mit Verteilerscheiben ausgestatteten Scheibenstreuern besteht dabei insbesondere darin, dass sie über eine größere Streubreite eine gleichmäßigere Verteilung des Streugutes zu bewerkstelligen vermögen und den Dünger gezielt nur dort auszubringen vermögen, wo über Wurzeln der kultivierten Pflanzen die entsprechenden Nährstoffe aufgenommen werden. Ein derartiger Pneumatikstreuer ist beispielsweise aus der DE 10 2004 030 240 A1 bekannt.

Zur Dosierung des Verteilgutes, wie beispielsweise im Wesentlichen pulver- und/oder partikelförmigem Saatgut und/oder Dünger oder gegebenenfalls auch anderen, z.B. zum Pflanzenschutz dienenden Granulaten, haben sich insbesondere bei landwirtschaftlichen Verteilmaschinen Dosiereinheiten bewährt, welche ein drehangetriebenes Dosierrad umfassen, welches in einem Dosiergehäuse mit einem an dessen Oberseite angeordneten Dosiereinlass und einem an dessen Unterseite angeordneten Dosierauslass gelagert ist. Durch Veränderung der Drehgeschwindigkeit des Dosierrades, welches einteilig ausgestaltet sein oder auch zwei oder mehr, unabhängig voneinander oder gemeinsam drehangetriebene Dosierradsegmente aufweisen kann und üblicherweise in Form von Nocken- und/oder Zellenrädern ausgestaltet ist, lässt sich die Dosiermenge des in den zwischen den Nockenbergen angeordneten Nockentälern des Nockenrades bzw. in den Zellen des Zellenrades angereicherten Verteilgutes auf einfache Weise steuern.

Die Form des Dosierrades der Dosiereinheit muss grundsätzlich an den jeweiligen Saatgut- und/oder Düngertyp angepasst sein, um eine einwandfreie Dosierung mit dem gewünschten Massenstrom unter Vermeidung einer auch nur lokalen Unter- oder Überversorgung zu gewährleisten. Dies hängt vornehmlich damit zusammen, dass für partikuläre Düngemittel und für gleichfalls partikuläres, aber demgegenüber feinpartikuläreres sowie insbesondere gegenüber mechanischen Einwirkungen deutlich empfindlicheres Saatgut unterschiedliche Dosierräder erforderlich sind. So stellen z.B. für Düngemittel vornehmlich die vorgenannten Nockenräder oder Zellenräder mit einer Vielzahl an relativ kleinen Zellen das Mittel der Wahl dar, weil die oft hygroskopischen Düngerpartikel zum Anbacken an dem Dosierrad neigen und z.B. von Dosierrädern in Form von Zellenrädern mit großen Zellen zumindest während des Betriebs praktisch nicht entfernt werden können. Von Nockenrädern hingegen lassen sich derartige Anbackungen mittels geeigneter Reinigungseinrichtungen auch während des Betriebs entfernen, wobei solche Reinigungseinrichtungen z.B. zwischen die Nockenberge des Nockenrades und/oder zwischen einzelne Nockenradsegmente oder -scheiben, welche das Nockenrad bilden, eingreifende Stifte umfassen können, um anhaftende Düngerpartikel von dem Nockenrad "abkratzen" zu können. Für die präzise Dosierung von Saatgut stellen demgegenüber andersartige Dosierwalzen das Mittel der Wahl dar, wie insbesondere Zellenrad- und Zellenradsegmentwalzen sowie Loch- oder Nutenwalzen, deren Mantelfläche mit lochartigen oder, sich insbesondere in Umfangrichtung erstreckenden, nutförmigen Vertiefungen ausgestattet sind, welche das zu dosierende Saatgut schonend aufnehmen können, wobei die einzelnen Zellen der Zellenrad- oder Zellenradsegmentwalzen bzw. die Vertiefungen der Loch- oder Nutenwalzen dadurch gegen das Dosiergehäuse abgedichtet sind, dass sie gegen eine hierzu komplementäre Dichtfläche des Dosiergehäuses anliegen oder mit einem engen Spalt nach Art einer Spaltdichtung von diesem beabstandet sind.

Eine mit einer Mehrzahl an Dosiereinheiten mit drehangetriebenen Dosierrädern, wie insbesondere in Form von Nockenrädern, ausgestattete Verteilmaschine ist beispielsweise der EP 2 786 649 B1 zu entnehmen. Um eine jeweilige Dosiereinheit, deren Dosiereinlass gegenüber dem Dosierauslass einerseits mittels einer gegen das Dosierrad wirksamen Dichtlippe, andererseits mittels einer zwischen dem Dosierrad und einer Seitenwand des Dosiergehäuses wirksamen Dichteinrichtung abgedichtet ist, an verschiedene Verteilgutarten, wie insbesondere an verschiedene Saatgut und/oder Düngertypen, anpassen zu können, lassen sich einzelne Dosierradsegmente des Dosierrades, welche in Form von Nocken- und/oder Zellenradsegmenten sowie gegebenenfalls in Form von Loch- oder Nutenwalzen ausgestaltet sind, austauschen. Zu diesem Zweck muss das Dosierrad jedoch demontiert und in der gewünschten Zusammensetzung der Dosierradsegmente wieder montiert werden, was in handhabungstechnischer Hinsicht einen gewissen Aufwand seitens des Bedieners erfordert.

Die WO 2017/138867 A1 beschreibt eine gattungsgemäße Dosiereinheit für landwirtschaftliche Verteilmaschinen mit einem Dosiergehäuse, welches einen Dosiereinlass und einen Dosierauslass sowie einen zwischen dem Dosiereinlass und dem Dosierauslass angeordneten Aufnahmeraum zur Aufnahme eines Dosiereinsatzes aufweist. Der Aufnahmeraum des Dosiergehäuses dient zur Aufnahme von verschiedenen Dosiereinsätzen mit unterschiedlichen, an verschiedene Verteilguttypen angepassten Dosierrädern, wobei jeder Dosiereinsatz ein zu dem Aufnahmeraum des Dosiergehäuses komplementäres Einsatzgehäuse umfasst, in welchem das jeweilige Dosierrad antriebslos gelagert ist und welches derart in den Aufnahmeraum des Dosiergehäuses einführbar ist, dass ein Einlass des Einsatzgehäuses des Dosiereinsatzes mit dem Dosiereinlass des Dosiergehäuses und ein Auslass des Einsatzgehäuses des Dosiereinsatzes mit dem Dosierauslass des Dosiergehäuses korrespondiert. Die Dosiereinsätze sind dabei im Wesentlichen gasdicht ausgestaltet, um für eine Abdichtung der Dosiereinheit gegen einen Durchtritt von Luft aus der unterhalb der Dosiereinheit angeordneten, mit dem Gebläse in Verbindung stehenden Übergabekammer in den oberhalb der Dosiereinheit angeordneten Vorratsbehälter der Verteilmaschine zu sorgen. Ein an die Stirnseite des Dosiergehäuses angeflanschter Antriebsmotor dient zum Drehantrieb des Dosierrades eines jeweiligen, in den Aufnahmeraum des Dosiergehäuses eingeführten Dosiereinsatzes.

Von Nachteil erweist sich insbesondere das durch die Druckdichtigkeit der Dosiereinheit notwendige große Antriebsdrehmoment der Dosierwalze der Dosiereinsätze sowie der mit dem Betrieb der Dosiereinheit einhergehende hohe Verschleiß des Dosierrades, welches während seiner Rotation gegen das Einsatzgehäuse eines jeweiligen Dosiereinsatzes stets weitestgehend gasdicht angepresst wird. Darüber hinaus hat sich gezeigt, dass es im Falle eines an der Dosiereinheit anliegenden Druckgradienten während des Betriebs der Dosiereinheit zu sukzessiven Druckstößen kommt, indem ein dosierauslassseitig, z.B. in der Übergabekammer, herrschender Überdruck über die Zellen des rotierenden Dosierrades an den Dosiereinlass transportiert wird, wo sich der Druck entspannt, sobald eine jeweilige Zelle des Dosierrades den Dosiereinlass erreicht, und das im Bereich des Dosiereinlasses vorhandene Verteilgut verwirbelt, so dass es nicht in der vorgesehenen Weise in Richtung des Dosierrades zu fließen vermag und es aufgrund nicht oder nur teilweise befüllter Zellen des Dosierrades zu Fehldosierungen kommen kann.

Eine weitere gattungsgemäße Dosiereinheit für landwirtschaftliche Verteilmaschinen ist aus der US 2018/0263178 A1 bekannt.

Der Erfindung liegt die Aufgabe zugrunde, eine Dosiereinheit der eingangs genannten Art sowie eine mit wenigstens einer solchen Dosiereinheit ausgestattete Verteilmaschine unter zumindest weitestgehender Vermeidung der vorgenannten Nachteile auf einfache und kostengünstige Weise dahingehend weiterzubilden, dass unter Gewährleistung einer hohen Betriebssicherheit und eines allenfalls geringen Verschleißes des Dosierrades eine sehr hohe Dosiergenauigkeit bei einer einfachen und bequemen Handhabung der Dosiereinheit sichergestellt wird.

Erfindungsgemäß wird diese Aufgabe bei einer Dosiereinheit der eingangs genannten Art dadurch gelöst, dass der Abstreifer des wenigstens einen Dosiereinsatzes aus einem nachgiebig elastischen Material gefertigt ist und an seinem dem Dosierrad fernen Ende im Wesentlichen in Radialrichtung des Dosierrades an einer Wandung des Einsatzgehäuses festgelegt ist, wobei der Abstreifer an seinem dem Dosierrad nahen Ende im Wesentlichen in Umfangsrichtung des Dosierrades elastisch verformt ist.

Zur Lösung dieser Aufgabe sieht die Erfindung bei einer Verteilmaschine der eingangs genannten Art, wie insbesondere bei einer landwirtschaftlichen Verteilmaschine, z.B. in Form einer Sämaschine oder eines Düngerstreuers, ferner vor, dass sie mit wenigstens einer derartigen Dosiereinheit ausgestattet ist.

Die erfindungsgemäße Dosiereinheit ermöglicht einerseits eine als solche z.B. aus der oben erwähnten WO 2017/138867 A1 bekannte einfache Austauschbarkeit des Dosiereinsatzes, indem letzterer in den Aufnahmeraum des Dosiergehäuses eingeführt bzw. ausgezogen werden kann, um verschiedenartige Dosierräder eines jeweiligen Dosiereinsatzes für unterschiedliche Verteilgüter vorsehen zu können. Dabei ermöglicht die erfindungsgemäße Ausgestaltung des mit dem Dosierrad des Dosiereinsatzes zusammenwirkenden Abstreifers aus einem nachgiebig elastischen Material jedoch einerseits einen Druckausgleich zwischen dem Dosiereinlass und dem Dosierauslass des Dosiergehäuses durch den in dessen Aufnahmeraum eingeführten Dosiereinsatz, so dass es während des Betriebs nicht zu Druckstößen kommt, welche andernfalls durch die Zellen des rotierenden Dosierrades von dem Auslass in den Einlass übertragen werden. Darüber hinaus erfordert der Antrieb des Dosierrades mangels hoher Reibung an dem Einsatzgehäuse ein nur geringes Antriebsdrehmoment, so dass der Antriebsmotor der Dosiereinheit entsprechend dimensioniert und ein energiesparender Betrieb der Dosiereinheit bei einer hohen Betriebssicherheit erreicht werden kann. Aufgrund der elastischen Nachgiebigkeit des Abstreifers werden ferner mechanische Beeinträchtigen empfindlicher Verteilgüter, wie z.B. druckempfindlicher Saatguttypen, zuverlässig vermieden, so dass sich die erfindungsgemäße Dosiereinheit je Ausgestaltung des Dosierrades eines jeweiligen Dosiereinsatzes für praktisch beliebige Verteilguttypen anbietet.

Der Abstreifer wirkt dabei derart mit dem Dosierrad des Dosiereinsatzes zusammen, indem er unter elastischer Verformung in Richtung dem Außenumfang des Dosierrades vorbelastet ist. In diesem Zusammenhang ist vorgesehen, dass der Abstreifer des wenigstens einen Dosiereinsatzes an seinem dem Dosierrad fernen Ende im Wesentlichen in Radialrichtung des Dosierrades an einer Wandung des Einsatzgehäuses festgelegt ist, wobei der Abstreifer an seinem dem Dosierrad nahen Ende im Wesentlichen in Umfangsrichtung des Dosierrades elastisch verformt ist, so dass das dem Dosierrad nahe Ende beispielsweise etwa tangential dem Umfang des Dosierrades anliegt. Das dem Dosierrad ferne Ende des Abstreifers kann dabei vorzugsweise im Wesentlichen horizontal an der Wandung des Einsatzgehäuses festgelegt sein, so dass sein dem Dosierrad nahes Ende in Rotationsrichtung des Dosierrades nach unten elastisch verformt ist und auf diese Weise nach Beendigung der Verteilarbeit keine nennenswerten Restmengen an Verteilgut in dem Einsatzgehäuse des Dosiereinsatzes zurückbleiben. Der Abstreifer kann dabei z.B. im Wesentlichen plattenförmig aus einem elastisch nachgiebigen Material, wie beispielsweise Gummi, Silikon, vorzugsweise thermoplastischen Elastomeren, wie z.B. thermoplastischen Polyurethanelastomeren oder dergleichen, gefertigt sein, wobei er infolge seiner Montage in einem elastisch verformten Zustand elastisch gegen das Dosierrad angedrückt wird.

Wie bereits angedeutet, kann das Dosierrad eines jeweiligen Dosiereinsatzes grundsätzlich eine als solche beliebige bekannte Ausgestaltung besitzen und beispielsweise in Form eines Zellen- oder Nockenrades ausgebildet sein. Sofern das Dosierrad des wenigstens einen Dosiereinsatzes in Form eines Zellenrades ausgebildet ist, kann die Länge des Abstreifers zweckmäßigerweise derart bemessen sein, dass er sich über die Umfangsbreite zumindest einer Zelle des Zellenrades erstreckt, wobei die Länge des Abstreifers insbesondere derart bemessen ist, dass er stets der Stirnseite eines Zellenstegs des Zellenrades anliegt, so dass bei stillstehendem Dosierrad Verteilgut in noch leere Zellen einlassseitig des Abstreifers hineinfließen kann, ohne an dem Abstreifer vorbei in den Auslass des Dosiereinsatzes gelangen zu können.

Um für einen besonders geringen Verschleiß des Dosierrades bei einem nur geringen Leistungsbedarf des Antriebsmotors zu sorgen, kann in vorteilhafter Ausgestaltung vorgesehen sein, dass das Dosierrad des wenigstens einen Dosiereinsatzes im Bereich seiner dem Abstreifer entgegengesetzten Seite unter Bildung eines Spaltes mit einem zumindest geringfügigen Abstand von dem Einsatzgehäuse angeordnet ist, so dass auch insoweit ein Gasaustausch zwischen dem Dosiereinlass und dem Dosiereinlass des Dosiergehäuses durch den in dessen Aufnahmeraum eingeführten Dosiereinsatz möglich ist und einlassseitige Druckstöße vermieden werden. Die Spaltbreite kann dabei beispielsweise zwischen etwa 0,1 mm und etwa 5 mm, vorzugsweise zwischen etwa 0,5 mm und etwa 3 mm, betragen. Es sei an dieser Stelle darauf hingewiesen, dass ein solcher, zwischen dem Dosierrad des wenigstens einen Dosiereinsatzes im Bereich seiner dem Abstreifer entgegengesetzten Seite und dem Einsatzgehäuse vorhandener Spalt aus den vorgenannten Gründen auch unabhängig von der Ausgestaltung des Abstreifers bei gattungsgemäßen Dosiereinheiten gemäß dem Oberbegriff des Anspruchs 1 vorteilhaft sein kann.

Um für einen kompakten Aufbau der Dosiereinheit zu sorgen, kann der Antriebsmotor, bei welchem es sich zweckmäßigerweise um einen entsprechend dem gewünschten Massenstrom an Verteilgut drehzahlsteuer- und/oder -regelbaren Elektromotor handeln kann, vorzugsweise an dem Dosiergehäuse angeordnet sein.

An dem Dosiergehäuse kann in vorteilhafter Ausgestaltung eine sich in seinen Aufnahmeraum hinein erstreckende und mit dem Antriebsmotor in Verbindung stehende Antriebswelle gelagert sein, welche drehfest mit dem Dosierrad des wenigstens einen Dosiereinsatzes koppelbar ist, wenn letzterer in den Aufnahmeraum des Dosiergehäuses eingeführt worden ist. Bei der in dem Dosiergehäuse gelagerte Antriebswelle kann es sich entweder um eine Abtriebswelle des z.B. an dem Dosiergehäuse festgelegten Antriebsmotors handeln, oder die Abtriebswelle des z.B. an dem Dosiergehäuse festgelegten Antriebsmotors kann sich zwecks einer hohen Kompaktheit vorteilhafterweise etwa parallel zu der an dem Dosiergehäuse gelagerten Antriebswelle erstrecken, welche mit der Abtriebswelle des Antriebsmotors beispielsweise mittels eines Zahn- oder Keilriementriebs oder insbesondere mittels kämmender Zahnräder, welche an dem Dosiergehäuse gelagert sein können, in Verbindung steht.

Die Antriebswelle des Dosiergehäuses kann dabei z.B. ein Mehrkantaußen- oder Mehrkantinnenprofil aufweisen, welches mit einem hierzu komplementären Mehrkantinnen- oder Mehrkantaußenprofil des Dosierrades des wenigstens einen Dosiereinsatzes im Eingriff steht, wenn letzterer in den Aufnahmeraum des Dosiergehäuses eingeführt worden ist, um das in dem jeweiligen Dosiergehäuse antriebslos gelagerte Dosierrad mittels des Antriebsmotors in Rotation versetzen zu können.

In diesem Zusammenhang kann es darüber hinaus von Vorteil sein, wenn das Dosierrad des wenigstens einen Dosiereinsatzes mittels einer, insbesondere stirnseitig des Dosierrades angeordneten, Handhabe drehbar ist, um das Dosierrad des Dosiereinsatzes in einfacher Weise mit der Antriebswelle des Dosiergehäuses drehfest zu koppeln, wenn der Dosiereinsatz in den Aufnahmeraum des Dosiergehäuses unter drehfester Kopplung des Dosierrades mit der Antriebswelle eingeführt wird.

Gemäß einer vorteilhaften Weiterbildung kann vorgesehen sein, dass das Dosiergehäuse im Bereich seines Dosiereinlasses ferner wenigstens eine Rührwelle aufweist, welche insbesondere gleichfalls mit dem Antriebsmotor in Verbindung steht und mit Vorteil - sei es z.B. manuell oder sei es z.B. motorisch bzw. aktuatorisch - bedarfsweise mit dem Antriebsmotor koppelbar sowie von diesem entkoppelbar sein kann. Die Verbindung der Rührwelle mit dem Antriebsmotor kann vorzugsweise gleichfalls über kämmende Zahnräder geschehen, welche z.B. an dem Dosiergehäuse gelagert sind, so dass der Antriebsmotor sowohl das Dosierrad des in den Aufnahmeraum des Dosiergehäuses eingesetzten Dosiereinsatzes als auch die Rührwelle anzutreiben vermag, wobei die Drehzahl der Rührwelle entsprechend dem Radienverhältnis der miteinander im Eingriff stehenden Zahnräder insbesondere größer (oder auch identisch oder kleiner) sein kann als die Drehzahl des Dosierrades.

Was den Innenquerschnitt des Aufnahmeraumes des Dosiergehäuses bzw. den hierzu komplementären Außenquerschnitt des Einsatzgehäuses des jeweiligen Dosiereinsatzes betrifft, so kann der Aufnahmeraum des Dosiergehäuses z.B. im Wesentlichen zylindrisch ausgestaltet sein und das Einsatzgehäuse des wenigstens einen Dosiereinsatzes eine hierzu komplementäre, im Wesentlichen zylindrische Form besitzen, welche selbstverständlich nicht notwendigerweise kreiszylindrisch sein muss. Stattdessen kann vorzugweise auch vorgesehen sein, dass der Aufnahmeraum des Dosiergehäuses sich zumindest geringfügig von außen nach innen verjüngt und das Einsatzgehäuse des wenigstens einen Dosiereinsatzes eine hierzu komplementäre, sich zumindest geringfügig von außen nach innen verjüngende Form besitzt, so dass der jeweilige Dosiereinsatz einfacher in den Aufnahmeraum des Dosiergehäuses eingeschoben werden kann. In beiden Fällen sollte das Einsatzgehäuse des wenigstens einen Dosiereinsatzes bevorzugt selbstzentrierend in dem Aufnahmeraum des Dosiergehäuses einführbar sein, was beispielsweise mittels zueinander komplementärer Strukturen einerseits des Aufnahmeraumes des Dosiergehäuses, andererseits des Einsatzgehäuses des jeweiligen Dosiereinsatzes, geschehen kann.

Das zu dem Aufnahmeraum des Dosiergehäuses komplementäre Einsatzgehäuse des wenigstens einen Dosiereinsatzes kann ferner im Wesentlichen staubdicht sowie vorzugsweise auch weitestgehend feuchtigkeitsdicht gegen den Aufnahmeraum des Dosiergehäuses anliegen, um ein Eindringen von Verunreinigungen, wie feiner Staub- oder Verteilgutpartikel, Feuchtigkeit und dergleichen, zu verhindern.

Um für eine einfache und bequeme Handhabung der Dosiereinheit zu sorgen, kann das Dosiergehäuse vorteilhafterweise einen Schnellverschluss, insbesondere in Form eines manuell betätigbaren Hebels, aufweisen, welcher zum Arretieren des Einsatzgehäuses des wenigstens einen Dosiereinsatzes in dem Aufnahmeraum des Dosiergehäuses ausgebildet ist, wenn das Einsatzgehäuse des Dosiereinsatzes in den Aufnahmeraum des Dosiergehäuses eingeführt worden ist, so dass ein einfacher Austausch der Dosiereinsätze mit unterschiedlichen Dosierrädern möglich ist.

Wie bereits erwähnt, umfasst die erfindungsgemäße Dosiereinheit folglich insbesondere eine Mehrzahl an Dosiereinsätzen mit verschiedenen Dosierrädern, welche austauschbar in den Aufnahmeraum des Dosiergehäuses einführbar sind.

Um eine Anreicherung von Verteilgutpartikeln an dem dem Dosiereinlass des Dosiergehäuse zugewandten Einlass eines in dessen Aufnahmeraum eingeführten Dosiereinsatzes zu verhindern, kann der Einlass des Einsatzgehäuses wenigstens eines Dosiereinsatzes vorzugsweise mit Zuführschrägen versehen sein, welche zum Zuführen des pulver- und/oder partikelförmigen Verteilgutes an das Dosierrad ausgebildet sind. Sofern zumindest ein Dosiereinsatz insbesondere ein zur Feindosierung vorgesehenes Dosierrad mit einer gegenüber der Länge des Dosiereinsatzes kleinen axialen Länge des Dosierrades aufweist, kann auf diese Weise sichergestellt werden, dass das über den Dosiereinlass zugeführte Verteilgut gleichwohl im Wesentlichen vollständig dosiert wird, ohne dass Restmengen im Bereich des Einlasses des Dosiereinsatzes zurückbleiben.

Schließlich kann das Dosierrad wenigstens eines Dosiereinsatzes in als solcher bekannter Weise eine Mehrzahl an Dosierradsegmenten aufweisen, welche insbesondere an ihren einander zugewandten axialen Enden mittels einer ringförmigen Wandung voneinander getrennt sind, und/oder das Dosierrad wenigstens eines weiteren Dosiereinsatzes kann im Wesentlichen einteilig ausgestaltet sein, um es an den jeweiligen Verteilguttyp und/oder an die jeweilige Verteilmaschine anzupassen.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Ausführungsform einer landwirtschaftlichen Verteilmaschine in Fahrtrichtung betrachtet;
- Fig. 2: eine schematische perspektivische Ansicht einer Ausführungsform einer Dosiereinheit der Verteilmaschine gemäß Fig. 1 mit einem Dosiergehäuse und mehreren in dieses einführbaren Dosiereinsätzen;
- Fig. 3: eine schematische perspektivische Detailansicht des Dosiergehäuses der Dosiereinheit gemäß Fig. 2;
- Fig. 4: eine schematische perspektivische Detailansicht des Dosiergehäuses gemäß Fig. 3 von der entgegengesetzten Seite betrachtet;
- Fig. 5: einen schematischen Längsschnitt des Dosiergehäuses gemäß Fig. 3 und 4;
- Fig. 6: eine schematische perspektivische Ansicht der Dosiereinheit gemäß Fig. 2 mit einem in das Dosiergehäuse entsprechend den Fig. 3 bis 5 eingeführten Dosiereinsatz;
- Fig. 7: eine schematische perspektivische Querschnittsansicht der Dosiereinheit gemäß Fig. 6;
- Fig. 8: eine schematische Querschnittsansicht der Dosiereinheit entsprechend Fig. 6 und 7;
- Fig. 9: einen schematischen Längsschnitt durch das Dosiergehäuse gemäß Fig. 3 bis 5 während des Einführens eines Dosiereinsatzes;
- Fig. 10: einen der Fig. 9 entsprechenden Längsschnitt, nachdem der Dosiereinsatz vollständig in das Dosiergehäuse eingeführt worden ist;
- Fig. 11A: eine schematische perspektivische Ansicht eines der Dosiereinsätze der Dosiereinheit gemäß Fig. 2;
- Fig. 11B: einen schematischen Längsschnitt durch den Dosiereinsatz der Fig. 11A;
- Fig. 11C: einen schematischen Querschnitt durch den Dosiereinsatz der Fig. 11A und 11B;
- Fig. 12A: eine schematische perspektivische Ansicht eines weiteren Dosiereinsatzes der Dosiereinheit gemäß Fig. 2;
- Fig. 12B: einen schematischen Längsschnitt durch den Dosiereinsatz der Fig. 12A;
- Fig. 12C: einen schematischen Querschnitt durch den Dosiereinsatz der Fig. 12A und 12B;
- Fig. 13A: eine schematische perspektivische Ansicht eines weiteren Dosiereinsatzes der Dosiereinheit gemäß Fig. 2;
- Fig. 13B: einen schematischen Längsschnitt durch den Dosiereinsatz der Fig. 13A;
- Fig. 13C: einen schematischen Querschnitt durch den Dosiereinsatz der Fig. 13A und 13B;
- Fig. 14A: eine schematische perspektivische Ansicht eines weiteren Dosiereinsatzes der Dosiereinheit gemäß Fig. 2;
- Fig. 14B: einen schematischen Längsschnitt durch den Dosiereinsatz der Fig. 14A; und
- Fig. 14C: einen schematischen Querschnitt durch den Dosiereinsatz der Fig. 14A und 14B.

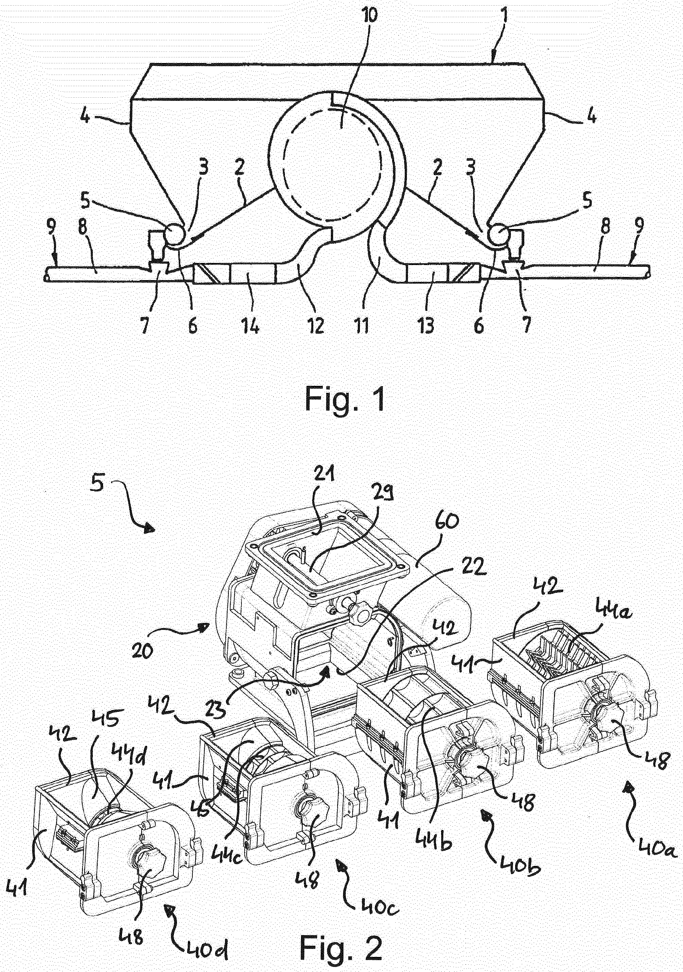

In der Fig. 1 ist eine Ausführungsform einer landwirtschaftlichen Verteilmaschine in stark schematisierter Form wiedergegeben. Die im vorliegenden Fall in Form einer pneumatischen Sämaschine, eines pneumatischen Düngerstreuers oder einer Drillmaschine ausgestaltete Verteilmaschine weist einen Vorratsbehälter 1 mit zwei Behälterteilen auf, welche je einen sich konisch nach unten verjüngenden Boden 2 besitzen, welcher zu je einer Auslauföffnung 3 hin abfällt. Die seitlichen Begrenzungen des Vorratsbehälters 1 sind von Wandungen 4 gebildet, welche sich gleichfalls in Richtung der jeweiligen Auslauföffnung 3 nach unten verjüngen. An die Auslauföffnungen 3 schließt sich nach unten je eine Dosiereinheit 5 an, wie sie weiter unten unter Bezugnahme auf die Fig. 2 ff im Einzelnen erläutert ist. Unterhalb der Dosiereinheiten 5 angeordnete Zuleitungen 7 münden in einen Abschnitt 8 je einer Förderleitung 9, welche in entgegengesetzte Richtungen nach außen führen. Die pneumatische Verteilmaschine umfasst ferner ein Gebläse 10, welches beispielsweise im zentralen Bereich ihrer Längsachse positioniert ist. Aus je einem Druckstutzen 11, 12 des Gebläses 10 führt je ein Luftverteiler 13, 14 zu den Abschnitten 8 der Förderleitungen 9, um das dort zudosierte Verteilgut, wie insbesondere Dünger oder Saatgut, in einer Übergabekammer aufzunehmen, welche in als solcher bekannten Weise mit einer Düse und einem Injektor (nicht gezeigt) ausgestattet sein kann.

Während in der schematischen Darstellung der Fig. 1 nur je eine Förderleitung 9 dargestellt ist, sei darauf hingewiesen, dass im Bereich des Übergangs zwischen den Luftverteilern 13, 14 zu den Förderleitungen 9 insbesondere eine Mehrzahl an Übergabekammern, welche vorzugsweise mit Injektoren der vorgenannten Art versehen sein können, angeordnet sein kann, mittels welcher der aus den Druckstutzen 11, 12 zugeführte Gas- bzw. Luftstrom in eine Mehrzahl an Förderleitungen (nicht gezeigt), wie je ein Bündel von Förder- bzw. Verteilerleitungen, überführt wird. Alternativ kann z.B. auch eine jeweilige Förderleitung 9 in einen Verteilerkopf (ebenfalls nicht gezeigt) münden, aus welchem eine Mehrzahl an Förderleitungen ausmündet. Mittels der Mehrzahl an Förderleitungen wird das Verteilgut schließlich pneumatisch bis zu an deren Ende angeordnete Verteilorgane (ebenfalls nicht gezeigt) überführt, welche z.B. von Säscharen oder Prallorganen gebildet sein können, auf welche das Verteilgut auftrifft, um von dort im Wesentlichen linien- oder fächerförmig auf dem Boden abgelegt oder in diesen eingebracht werden zu können. Die Verteilorgane können an sich beidseits quer zur Fahrtrichtung (in Fig. 1 nach rechts und links) erstreckenden Auslegern (nicht zeichnerisch dargestellt) angeordnet sein, wobei die Verteilorgane mit unterschiedlichen seitlichen Abständen von dem Vorratsbehälter 1 angeordnet sind und jedem Verteilorgan je eine Förder- bzw. Verteilerleitung eines Bündels von Förder- bzw. Verteilerleitungen zugeordnet ist.

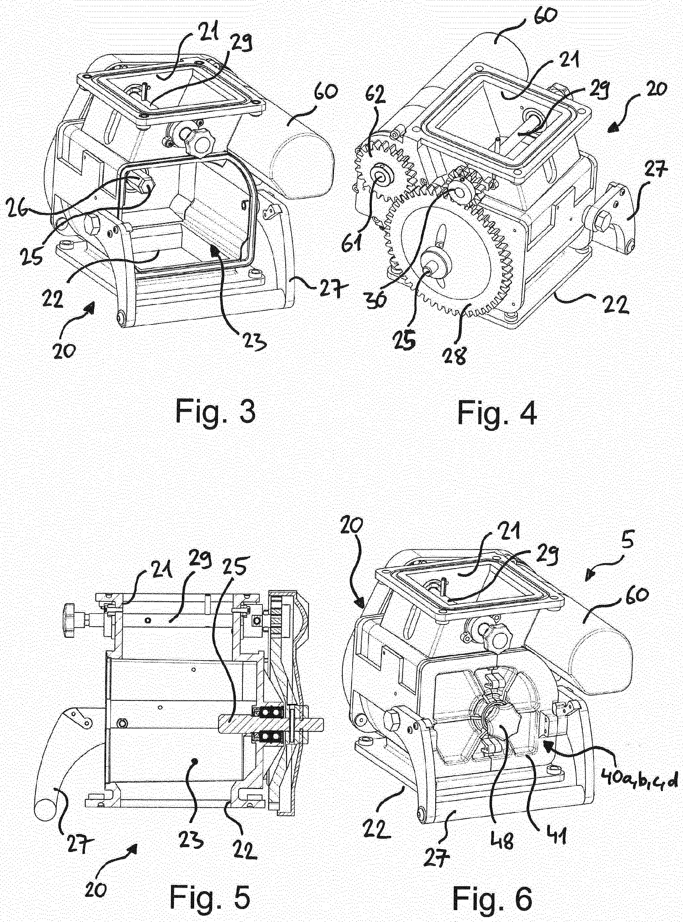

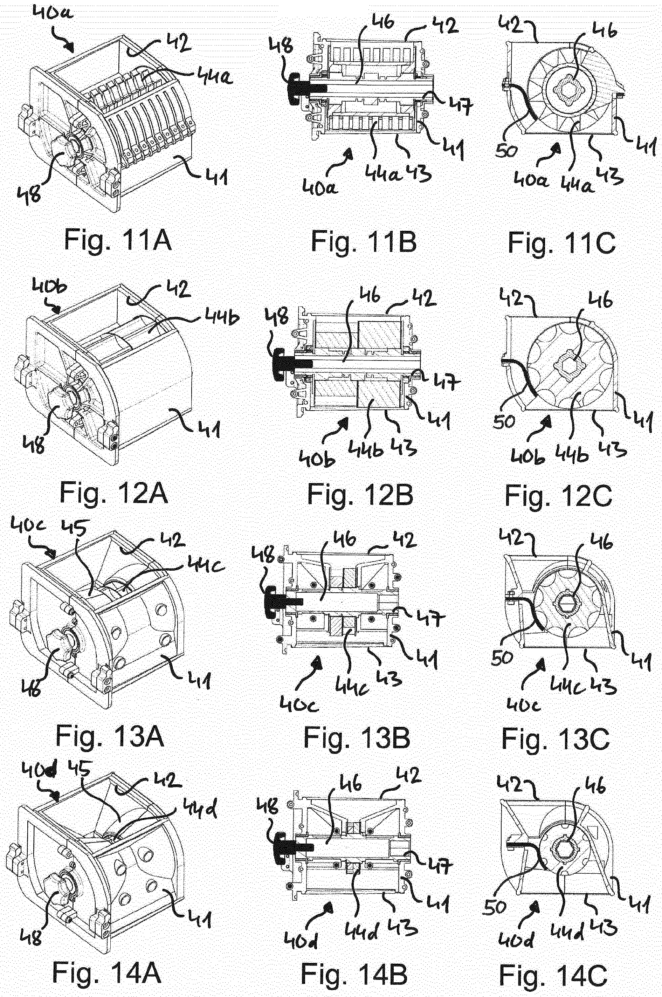

In der Fig. 2 ist ein Ausführungsbeispiel einer Dosiereinheit 5 zur Dosierung von pulver- und/oder partikelförmigem Verteilgut, wie insbesondere Saatgut und/oder Dünger, der landwirtschaftlichen Verteilmaschine gemäß der Fig. 1 dargestellt. Die Dosiereinheit 5 umfasst ein Dosiergehäuse 20 (vgl. insbesondere auch die Fig. 3 bis 5), welches einen an seiner Oberseite angeordneten Dosiereinlass 21, welcher sich beispielsweise von oben/außen nach unten/innen verjüngt, und einen an seiner Unterseite angeordneten Dosierauslass 22 besitzt. Im montierten Zustand in der Verteilmaschine gemäß der Fig. 1 steht der Dosiereinlass 21 eines jeweiligen Dosiergehäuses 20 mit einer der Auslauföffnungen 3 des Vorratsbehälters 1 in Verbindung, während der Dosierauslass 22 in die Zuleitung 7 bzw. die dieser nachgeordnete Übergabekammer eines jeweiligen Förderleitungsabschnittes 8 mündet, wobei an dem Dosiereinlass 22 vorzugsweise ferner ein nicht zeichnerisch dargestelltes, insbesondere motorisch auf- und zusteuerbares Absperrorgan, z.B. in Form eines Schiebers, montiert sein kann, um die Zufuhr von Verteilgut aus dem Vorratsbehälter 1 an das Dosierorgan 5 während Ruhe- bzw. Stillstandszeiten der Verteilmaschine zu verhindern. Im Innern des Dosiergehäuses 20 des Dosierorgans 5 befindet sich zwischen dem Dosiereinlass 21 und dem Dosierauslass 22 ein von der in den Fig. 2 und 3 vorderen, in der Fig. 4 hinteren und in der Fig. 5 linken Stirnsite her zugänglicher Aufnahmeraum 23, welcher zur austauschbaren Aufnahme je eines einer Mehrzahl - hier: vier - an Dosiereinsätzen 40a, 40b, 40c, 40d (vgl. insbesondere auch die Fig. 11 bis 14) dient, welche in der nachfolgend erläuterten Weise an verschiedenartige Verteilguttypen angepasst sind.

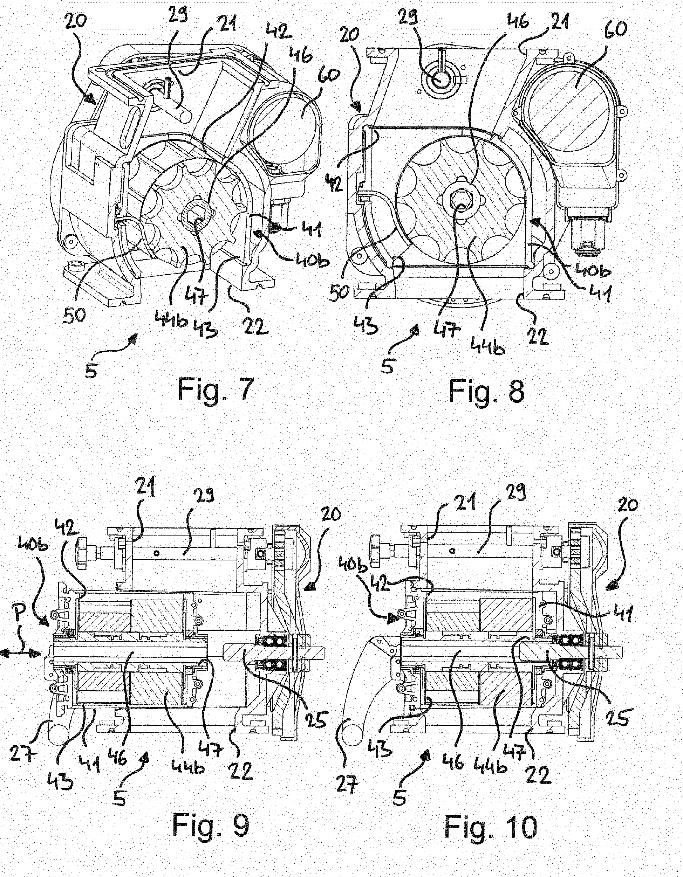

Die Dosiereinsätze 40a, 40b, 40c, 40d der Dosiereinheit 5 gemäß der Fig. 2, welche in den Fig. 11 bis 14 jeweils nochmals im Detail wiedergegeben sind und von welchen einer in den Ansichten der Fig. 6 bis 8 in dem Dosiergehäuse 20 montiert worden ist, wie es anhand der Fig. 9 und 10 veranschaulicht ist, weisen jeweils ein zu dem Aufnahmeraum 23 des Dosiergehäuses 20 komplementäres Einsatzgehäuse 41 auf, welches zweckmäßigerweise selbstzentrierend in den Aufnahmeraum 23 des Dosiergehäuses 20 einführbar bzw. aus diesem ausziehbar ist (vgl. den Pfeil P in Verbindung mit den Fig. 9 und 10) und im montierten Zustand der Fig. 6 bis 8 vorzugsweise im Wesentlichen staub- und feuchtigkeitsdicht gegen den Aufnahmeraum 23 des Dosiergehäuses 20 anliegt, um ein Eindringen von Verunreinigungen zu verhindern. Während der Aufnahmeraum 23 des Dosiergehäuses 20 dabei im Wesentlichen zylindrisch ausgestaltet und das Einsatzgehäuse 41 eines jeweiligen Dosiereinsatzes 40a, 40b, 40c, 40d eine hierzu komplementäre, gleichfalls im Wesentlichen zylindrische Form besitzen kann, kann es sich im Hinblick auf eine einfache Montage eines jeweiligen Dosiereinsatzes 40a, 40b, 40c, 40d in dem Dosiergehäuse 20 als vorteilhaft erweisen, wenn der Aufnahmeraum 23 des Dosiergehäuses 20 sich zumindest geringfügig von außen nach innen verjüngt und das Einsatzgehäuse 41 eines jeweiligen Dosiereinsatzes 40a, 40b, 40c, 40d eine hierzu komplementäre, sich gleichfalls zumindest geringfügig von außen nach innen verjüngende Form besitzt. Das Einsatzgehäuse 41 eines jeweilige Dosiereinsatzes 40a, 40b, 40c, 40d umfasst ferner einen an seiner Oberseite angeordneten Einlass 42, welcher im montierten Zustand der Fig. 6 bis 8 mit dem Dosiereinlass 21 des Dosiergehäuses 20 in Verbindung steht, sowie einen an seiner Unterseite angeordneten Auslass 43, welcher im montierten Zustand der Fig. 6 bis 8 mit dem Dosierauslass 22 des Dosiergehäuses 20 in Verbindung steht.

In dem Einsatzgehäuse 41 eines jeweiligen Dosiereinsatzes 40a, 40b, 40c, 40d ist je ein Dosierrad 44a, 44b, 44c, 44d antriebslos gelagert, wobei sich die Einsatzgehäuse 41 der Dosiereinsätze 40a, 40b, 40c, 40d insbesondere durch die Ausgestaltung ihres Dosierrades 44a, 44b, 44c, 44d unterscheiden, welches an verschiedene Verteilguttypen angepasst ist (vgl. insbesondere die Fig. 2 sowie die Fig. 11 bis 14). So ist beispielsweise das Dosierrad 44a des Dosiereinsatzes 40a nach Art eines Zellenrades mit einer Mehrzahl an Zellenradsegmenten mit großem Aufnahmevolumen ausgestaltet, welche in Axialrichtung mittels ringförmiger Wandungen voneinander getrennt sind, um zu verhindern, dass Verteilgut aus einem Zellenradsegment in ein benachbartes Zellenradsegment gelangen kann, während das Dosierrad 44b des Dosiereinsatzes 40b z.B. ebenfalls nach Art eines Zellenrades mit zwei Zellenradsegmenten mit einem gegenüber dem Zellenrad 44a geringeren Aufnahmevolumen ausgestaltet ist, wobei die Zellenradsegmente in Axialrichtung gleichfalls mittels einer ringförmigen Wandung voneinander getrennt sind. Die Dosierräder 44c bzw. 44d der Dosiereinsätze 40c bzw. 40d sind beispielsweise in Form von schmalen Zellenrädern mit einer gegenüber der Länge des Dosiergehäuses 41 geringen axialen Erstreckung ausgestaltet, wobei wiederum z.B. je zwei Zellenradsegmente vorgesehen sind, welche in Axialrichtung mittels einer ringförmigen Wandung voneinander getrennt sind. Um insbesondere bei den letztgenannten Dosiereinsätzen 40c, 40d für eine ungehinderte Überführung des zu dosierenden Verteilgutes an das Dosierrad 44c, 44d zu sorgen, ohne dass sich Verteilgutpartikeln stromauf des Dosierrades 44c, 44d anreichern können, kann der Einlass 42 des jeweiligen Einsatzgehäuses 41 vorzugsweise mit Zuführschrägen 45 ausgestattet sein (vgl. die Fig. 2, 13 und 14).

Zur antriebslosen Lagerung eines jeweiligen Dosierrades 44a, 44b, 44c, 44d in dem Einsatzgehäuse 41 eines jeweiligen Dosiereinsatzes 40a, 40b, 40c, 40d ist das jeweilige Dosierrad 44a, 44b, 44c, 44d beim vorliegenden Ausführungsbeispiel drehfest auf einer in dem Einsatzgehäuse 41 gelagerten Dosierwelle 46 montiert, welche an ihrem einen, im montierten Zustand in den Aufnahmeraum 23 des Dosiergehäuses 20 eingeführten Ende ein Kopplungsmittel, z.B. in Form eines Mehrkantinnenprofils 47, aufweist, wohingegen an dem entgegengesetzten, das Einsatzgehäuse 41 nach außen durchgreifenden Ende der Dosierwelle 46 eine Handhabe 48 drehfest befestigt ist, mittels welcher die Dosierwelle 46 manuell gedreht werden kann. An dem Dosiergehäuse 20 ist eine sich in dessen Aufnahmeraum 23 hinein erstreckende Antriebswelle 25 gelagert, welche drehfest mit der Dosierwelle 46 eines jeweiligen Dosierrades 44a, 44b, 44c, 44d eines jeweiligen Dosiereinsatzes 40a, 40b, 40c, 40d koppelbar ist, wenn letzterer in den Aufnahmeraum 23 des Dosiergehäuses 20 eingeführt worden ist. Die Antriebswelle 25 umfasst zu diesem Zweck ein zu dem Kopplungsmittel der Dosierwelle 46 eines jeweiligen Dosierrades 44a, 44b, 44c, 44d eines jeweiligen Dosiereinsatzes 40a, 40b, 40c, 40d komplementäres Kopplungsmittel, z.B. im Form eines Mehrkantaußenprofils 26 (vgl. insbesondere die Fig. 3), welches mit dem Mehrkantinnenprofil 47 der Dosierwelle 46 eines jeweiligen Dosierrades 44a, 44b, 44c, 44d in Eingriff bringbar ist. Auf diese Weise ergibt sich eine sehr einfache Montage eines jeweiligen Dosiereinsatzes 40a, 40b, 40c, 40d in dem Aufnahmeraum 23 des Dosiergehäuses 20, indem das Einsatzgehäuse 41 eines jeweiligen Dosiereinsatzes 40a, 40b, 40c, 40d in den Aufnahmeraum 23 eingeführt wird, bis seine Dosierwelle 46 an die Antriebswelle 25 des Dosiergehäuses 20 anstößt. Sodann kann die Dosierwelle 46 mittels der Handhabe 48 so lange gedreht werden, bis sich das Mehrkantinnenprofil 47 der Dosierwelle 46 mit dem Mehrkantaußenprofil 26 der Antriebwelle 25 des Dosiergehäuses 20 in Flucht befindet und die z.B. in Form von Sechskantprofilen ausgestalteten Profile 26, 47 durch weiteres Einschieben des Einsatzgehäuses 41 in den Aufnahmeraum 23 des Dosiergehäuses 20 drehfest miteinander in Eingriff gebracht werden können. Eine solche Montagesituation ist in den Fig. 9 und 10 dargestellt, wobei die Handhabe 48 der Dosierwelle 46 des dortigen Dosiereinsatzes 44b aus Veranschaulichungsgründen weggelassen worden ist.

Das Dosiergehäuse 20 ist im vorliegenden Fall darüber hinaus mit einem Schnellverschluss ausgestattet, welcher einen an dem Dosiergehäuse 20 gelagerten und manuell betätigbaren Hebel 27 umfasst, welcher zum Arretieren des Einsatzgehäuses 41 eines jeweiligen Dosiereinsatzes 40a, 40b, 40c, 40d in dem Aufnahmeraum 23 des Dosiergehäuses 20 dient, wenn das Einsatzgehäuse 41 in den Aufnahmeraum 23 des Dosiergehäuses 20 eingeführt worden ist (vgl. insbesondere die Fig. 6, in welcher sich der Hebel 27 in seiner Arretierstellung befindet).

Zum Drehantrieb des Dosierrades 44a, 44b, 44c, 44d eines jeweiligen Dosiereinsatzes 40a, 40b, 40c, 40d, wenn dieser in der vorbeschriebenen Weise unter drehfester Kopplung seiner Dosierwelle 46 mit der Antriebswelle 26 des Dosiergehäuses 20 in den Aufnahmeraum 23 des Dosiergehäuses 20 eingeführt worden ist, dient ein drehzahlsteuerbarer und/oder -regelbarer Antriebsmotor 60, welcher beim vorliegenden Ausführungsbeispiel derart an dem Dosiergehäuse 20 festgelegt ist, dass sich seine Abtriebswelle 61 im Wesentlichen parallel zur Antriebswelle 25 des Dosiergehäuses 20 erstreckt (vgl. die Fig. 4). Auf der Abtriebswelle 61 des Antriebsmotors 60 sitzt hierbei z.B. ein Zahnrad 62, welches mit einem auf der Antriebswelle 25 des Dosiergehäuses 20 sitzenden Zahnrad 28 im Eingriff steht. Darüber hinaus steht mit zumindest einem der Zahnräder 28, 62 ein weiteres Zahnrad 30 im Eingriff, welches drehfest auf einer Rührwelle 29 sitzt, welche im Bereich des Dosiereinlasses 21 des Dosiergehäuses 20 drehbar gelagert ist, um das zu dosierende Verteilgut fließfähig zu halten und etwaige Verklumpungen desselben zu verhindern. Die Rührwelle 29 ist im vorliegenden Fall bedarfsweise mit dem Antriebsmotor 60 koppelbar sowie von diesem entkoppelbar, indem sie beispielsweise manuell oder motorisch (nicht gezeigt) so weit aus ihrer in der Fig. 4 dargestellten Betriebsposition in Axialrichtung verlagert werden kann, bis sich ihr Zahnrad 30 außer Eingriff mit dem Zahnrad 28 der Antriebswelle 25 des Dosiergehäuses 20 befindet.

Wie insbesondere aus den Fig. 7 und 8, aber auch aus den Fig. 11C, 12C, 13C und 14C hervorgeht, weist das Einsatzgehäuse 41 eines jeweiligen Dosiereinsatzes 40a, 40b, 40c, 40d einen mit dem jeweiligen Dosierrad 44a, 44b, 44c, 44d zusammenwirkenden Abstreifer 50 aus einem nachgiebig elastischen Material, wie z.B. aus einem elastomeren Kunststoffmaterial, auf, welcher sich zwischen dem Einlass 42 und dem Auslass 43 eines jeweiligen Dosiereinsatzes 40a, 40b, 40c, 40d befindet und folglich zwischen dem Dosiereinlass 21 und dem Dosierauslass 22 des Dosiergehäuses 20 angeordnet ist, wenn der jeweilige Dosiereinsatz 40a, 40b, 40c, 40d in den Aufnahmeraum 23 des Dosiergehäuses 20 eingeführt worden ist (vgl. die Fig. 7 und 8). Der Abstreifer 50 ist hierbei z.B. im Wesentlichen plattenförmig ausgestaltet und an seinem dem Dosierrad 44a, 44b, 44c, 44d fernen Ende im Wesentlichen in Radialrichtung des Dosierrades 44a, 44b, 44c, 44d sowie im vorliegenden Fall im Wesentlichen horizontal an einer mit Abstand von dem Dosierrad 44a, 44b, 44c, 44d angeordneten seitlichen Wandung des Einsatzgehäuses 41 festgelegt, während er an seinem dem Dosierrad 44a, 44b, 44c, 44d nahen Ende im Wesentlichen in Umfangsrichtung des Dosierrades 44a, 44b, 44c, 44d elastisch verformt ist, um ihn elastisch gegen den Umfang des Dosierrades 44a, 44b, 44c, 44d anzudrücken, ohne für eine gasdichte Abdichtung zu sorgen und aufgrund seiner elastischen Nachgiebigkeit weder einen erhöhten Verschleiß des Dosierrades 44a, 44b, 44c, 44d zu bewirken noch ein hohes Antriebsdrehmoment des Antriebsmotors 60 zum Drehantrieb des Dosierrades 44a, 44b, 44c, 44d zu erfordern. Die Länge des elastisch nachgiebigen Abstreifers 50 ist dabei zweckmäßigerweise derart bemessen, dass er sich über die Umfangsbreite zumindest einer Zelle des im vorliegenden Fall jeweils als Zellenrad ausgestalteten Dosierrades 44a, 44b, 44c, 44d erstreckt, wobei die Länge des Abstreifers 50 insbesondere derart bemessen ist, dass er stets der Stirnseite eines Zellenstegs des Zellenrades anliegt (vgl. insbesondere die Querschnittsansichten der Fig. 8, 11C, 12C, 13C und 14C), so dass auch im Falle eines vorübergehenden Stillstandes des Dosierrades 44a, 44b, 44c, 44d stets Verteilgut in noch leere Zellen einlassseitig des Abstreifers 50 nachzufließen vermag, aber kein Verteilgut über den Auslass 43 des Einsatzgehäuses 41 in den Dosierauslass 22 des Dosiergehäuses gelangen kann.

Um darüber hinaus für einen energie- und verschleißarmen Betrieb der Dosiereinheit zu sorgen, kann das Dosierrad 44a, 44b, 44c, 44d eines jeweiligen Dosiereinsatzes 40a, 40b, 40c, 40d im Bereich seiner dem Abstreifer 50 entgegengesetzten Seite unter Bildung eines Spaltes, vorzugsweise mit einer geringen Spaltbreite im Bereich von beispielsweise etwa 1 mm, unter einem geringfügigen Abstand von dem Einsatzgehäuse 41 - oder genauer: von dessen seitlicher Wandung - angeordnet sein.

## Patentansprüche

1. Dosiereinheit zur Dosierung von pulver- und/oder partikelförmigem Verteilgut, insbesondere Saatgut und/oder Dünger, für eine Verteilmaschine, umfassend:
- ein Dosiergehäuse (20) mit einem Dosiereinlass (21) und mit einem Dosierauslass (22) sowie mit einem zwischen dem Dosiereinlass (21) und dem Dosierauslass (22) angeordneten Aufnahmeraum (23) zur Aufnahme eines Dosiereinsatzes (40a, 40b, 40c, 40d);
- wenigstens einen Dosiereinsatz (40a, 40b, 40c, 40d) mit einem zu dem Aufnahmeraum (23) des Dosiergehäuses (20) komplementären Einsatzgehäuse (41), in welchem wenigstens ein Dosierrad (44a, 44b, 44c, 44d) antriebslos gelagert ist und welches derart in den Aufnahmeraum (23) des Dosiergehäuses (20) einführbar ist, dass ein Einlass (42) des Einsatzgehäuses (41) des Dosiereinsatzes (40a, 40b, 40c, 40d) mit dem Dosiereinlass (21) des Dosiergehäuses (20) und ein Auslass (43) des Einsatzgehäuses (41) des Dosiereinsatzes (40a, 40b, 40c, 40d) mit dem Dosierauslass (22) des Dosiergehäuses (20) korrespondiert; und
- einen Antriebsmotor (60), welcher zum Drehantrieb des Dosierrades (44a, 44b, 44c, 44d) des Dosiereinsatzes (40a, 40b, 40c, 40d) ausgebildet ist, wenn der Dosiereinsatz (40a, 40b, 40c, 40d) in den Aufnahmeraum (23) des Dosiergehäuses (20) eingeführt worden ist,
wobei das Einsatzgehäuse (41) des wenigstens einen Dosiereinsatzes (40a, 40b, 40c, 40d) einen mit dem Dosierrad (44a, 44b, 44c, 44d) zusammenwirkenden Abstreifer (50) aufweist, welcher zwischen dem Dosiereinlass (21) und dem Dosierauslass (22) des Dosiergehäuses (20) angeordnet ist, wenn der Dosiereinsatz (40a, 40b, 40c, 40d) in den Aufnahmeraum (23) des Dosiergehäuses (20) eingeführt worden ist, **dadurch gekennzeichnet, dass** der Abstreifer (50) des wenigstens einen Dosiereinsatzes (40a, 40b, 40c, 40d) aus einem nachgiebig elastischen Material gefertigt ist und an seinem dem Dosierrad (44a, 44b, 44c, 44d) fernen Ende im Wesentlichen in Radialrichtung des Dosierrades (44a, 44b, 44c, 44d) an einer Wandung des Einsatzgehäuses (41) festgelegt ist, wobei der Abstreifer (50) an seinem dem Dosierrad (44a, 44b, 44c, 44d) nahen Ende im Wesentlichen in Umfangsrichtung des Dosierrades (44a, 44b, 44c, 44d) elastisch verformt ist.

2. Dosiereinheit nach Anspruch 1, **dadurch gekennzeichnet, dass** der Abstreifer (50) des wenigstens einen Dosiereinsatzes (40a, 40b, 40c, 40d) an seinem dem Dosierrad (44a, 44b, 44c, 44d) fernen Ende im Wesentlichen horizontal an der Wandung des Einsatzgehäuses (41) festgelegt ist.

3. Dosiereinheit nach Anspruch 1 oder 2, dass das Dosierrad (44a, 44b, 44c, 44d) des wenigstens einen Dosiereinsatzes (40a, 40b, 40c, 40d) in Form eines Zellenrades ausgebildet ist, wobei die Länge des Abstreifers (50) derart bemessen ist, dass er sich über die Umfangsbreite zumindest einer Zelle des Zellenrades erstreckt, wobei die Länge des Abstreifers (50) insbesondere derart bemessen ist, dass er stets der Stirnseite eines Zellenstegs des Zellenrades anliegt.

4. Dosiereinheit nach einem der Ansprüche 1 bis 3, **dadurch gekennzeichnet, dass** das Dosierrad (44a, 44b, 44c, 44d) des wenigstens einen Dosiereinsatzes (40a, 40b, 40c, 40d) im Bereich seiner dem Abstreifer (50) entgegengesetzten Seite unter Bildung eines Spaltes mit einem zumindest geringfügigen Abstand von dem Einsatzgehäuse (41) angeordnet ist.

5. Dosiereinheit nach einem der Ansprüche 1 bis 4, **dadurch gekennzeichnet, dass** der Antriebsmotor (60) an dem Dosiergehäuse (20) angeordnet ist.

6. Dosiereinheit nach einem der Ansprüche 1 bis 5, **dadurch gekennzeichnet, dass** an dem Dosiergehäuse (20) eine sich in seinen Aufnahmeraum (23) hinein erstreckende und mit dem Antriebsmotor (60) in Verbindung stehende Antriebswelle (25) gelagert ist, welche drehfest mit dem Dosierrad (44a, 44b, 44c, 44d) des wenigstens einen Dosiereinsatzes (40a, 40b, 40c, 40d) koppelbar ist, wenn letzterer in den Aufnahmeraum (23) des Dosiergehäuses (20) eingeführt worden ist, wobei die Antriebswelle (25) des Dosiergehäuses (20) insbesondere ein Mehrkantaußen- (26) oder Mehrkantinnenprofil aufweist, welches mit einem hierzu komplementären Mehrkantinnen-(47) oder Mehrkantaußenprofil des Dosierrades (44a, 44b, 44c, 44d) des wenigstens einen Dosiereinsatzes (40a, 40b, 40c, 40d) im Eingriff steht, wenn letzterer in den Aufnahmeraum (23) des Dosiergehäuses (20) eingeführt worden ist.

7. Dosiereinheit nach Anspruch 6, **dadurch gekennzeichnet, dass** das Dosierrad (44a, 44b, 44c, 44d) des wenigstens einen Dosiereinsatzes (40a, 40b, 40c, 40d) mittels einer, insbesondere stirnseitig des Dosierrades (44a, 44b, 44c, 44d) angeordneten, Handhabe (48) drehbar ist, um das Dosierrad (44a, 44b, 44c, 44d) des Dosiereinsatzes (40a, 40b, 40c, 40d) mit der Antriebswelle (25) des Dosiergehäuses (20) drehfest zu koppeln.

8. Dosiereinheit nach einem der Ansprüche 1 bis 7, **dadurch gekennzeichnet, dass** das Dosiergehäuse (20) im Bereich seines Dosiereinlasses (21) ferner wenigstens eine Rührwelle (29) aufweist, welche insbesondere gleichfalls mit dem Antriebsmotor (60) in Verbindung steht.

9. Dosiereinheit nach einem der Ansprüche 1 bis 8, **dadurch gekennzeichnet, dass**
- der Aufnahmeraum (23) des Dosiergehäuses (20) im Wesentlichen zylindrisch ausgestaltet ist und das Einsatzgehäuse (41) des wenigstens einen Dosiereinsatzes (40a, 40b, 40c, 40d) eine hierzu komplementäre, im Wesentlichen zylindrische Form besitzt; oder
- der Aufnahmeraum (23) des Dosiergehäuses (20) sich zumindest geringfügig von außen nach innen verjüngt und das Einsatzgehäuse (41) des wenigstens einen Dosiereinsatzes (40a, 40b, 40c, 40d) eine hierzu komplementäre, sich zumindest geringfügig von außen nach innen verjüngende Form besitzt.

10. Dosiereinheit nach einem der Ansprüche 1 bis 9, **dadurch gekennzeichnet, dass** das zu dem Aufnahmeraum (23) des Dosiergehäuses (20) komplementäre Einsatzgehäuse (41) des wenigstens einen Dosiereinsatzes (40a, 40b, 40c, 40d) im Wesentlichen staubdicht gegen den Aufnahmeraum (23) des Dosiergehäuses (20) anliegt.

11. Dosiereinheit nach einem der Ansprüche 1 bis 10, **dadurch gekennzeichnet, dass** das Dosiergehäuse (20) einen Schnellverschluss, insbesondere in Form eines manuell betätigbaren Hebels (27), aufweist, welcher zum Arretieren des Einsatzgehäuses (41) des wenigstens einen Dosiereinsatzes (40a, 40b, 40c, 40d) in dem Aufnahmeraum (23) des Dosiergehäuses (20) ausgebildet ist, wenn das Einsatzgehäuse (41) in den Aufnahmeraum (23) des Dosiergehäuses (20) eingeführt worden ist.

12. Dosiereinheit nach einem der Ansprüche 1 bis 11, **dadurch gekennzeichnet, dass** sie eine Mehrzahl an Dosiereinsätzen (40a, 40b, 40c, 40d) mit verschiedenen Dosierrädern (44a, 44b, 44c, 44d) umfasst, welche austauschbar in den Aufnahmeraum (23) des Dosiergehäuses (20) einführbar sind.

13. Dosiereinheit nach einem der Ansprüche 1 bis 12, **dadurch gekennzeichnet, dass** der Einlass (42) des Einsatzgehäuses (41) wenigstens eines Dosiereinsatzes (40a, 40b, 40c, 40d) mit Zuführschrägen (45) versehen ist, welche zum Zuführen des Verteilgutes an das Dosierrad (44a, 44b, 44c, 44d) ausgebildet sind.

14. Dosiereinheit nach einem der Ansprüche 1 bis 13, **dadurch gekennzeichnet, dass** das Dosierrad (44a, 44b, 44c, 44d) wenigstens eines Dosiereinsatzes (40a, 40b, 40c, 40d) eine Mehrzahl an Dosierradsegmenten aufweist, welche insbesondere an ihren einander zugewandten axialen Enden mittels einer ringförmigen Wandung voneinander getrennt sind.

15. Verteilmaschine, insbesondere Sämaschine oder Düngerstreuer, **gekennzeichnet durch** wenigstens eine Dosiereinheit nach einem der Ansprüche 1 bis 14.

## Claims

1. Metering unit for metering powdered and/or particulate distribution material, in particular seeds and/or fertilizer, for a distribution machine, the metering unit comprising:
- a metering housing (20) having a metering inlet (21) and having a metering outlet (22) and having a receiving chamber (23) arranged between the metering inlet (21) and the metering outlet (22) for receiving a metering insert (40a, 40b, 40c, 40d);
- at least one metering insert (40a, 40b, 40c, 40d) having an insert housing (41) which is complementary to the receiving chamber (23) of the metering housing (20), in which at least one metering wheel (44a, 44b, 44c, 44d) is mounted without drive and which can be inserted into the receiving chamber (23) of the metering housing (20) such that an inlet (42) of the insert housing (41) of the metering insert (40a, 40b, 40c, 40d) corresponds to the metering inlet (21) of the metering housing (20) and an outlet (43) of the insert housing (41) of the metering insert (40a, 40b, 40c, 40d) corresponds to the metering outlet (22) of the metering housing (20); and
- a drive motor (60) which is designed to drive the metering wheel (44a, 44b, 44c, 44d) of the metering insert (40a, 40b, 40c, 40d) in rotation when the metering insert (40a, 40b, 40c, 40d) has been inserted into the receiving chamber (23) of the metering housing (20),
the insert housing (41) of the at least one metering insert (40a, 40b, 40c, 40d) having a scraper (50) which interacts with the metering wheel (44a, 44b, 44c, 44d) and which is arranged between the metering inlet (21) and the metering outlet (22) of the metering housing (20) when the metering insert (40a, 40b, 40c, 40d) has been inserted into the receiving chamber (23) of the metering housing (20), **characterized in that** the scraper (50) of the at least one metering insert (40a, 40b, 40c, 40d) is made of a compliant elastic material and is fixed at its end furthest from the metering wheel (44a, 44b, 44c, 44d) substantially in the radial direction of the metering wheel (44a, 44b, 44c, 44d) to a wall of the insert housing (41), the scraper (50) being elastically deformed at its end nearest the metering wheel (44a, 44b, 44c, 44d) substantially in the circumferential direction of the metering wheel (44a, 44b, 44c, 44d).

2. Metering unit according to claim 1, **characterized in that** the scraper (50) of the at least one metering insert (40a, 40b, 40c, 40d) is fixed at its end furthest from the metering wheel (44a, 44b, 44c, 44d) substantially horizontally to the wall of the insert housing (41).

3. Metering unit according to claim 1 or 2, that the metering wheel (44a, 44b, 44c, 44d) of the at least one metering insert (40a, 40b, 40c, 40d) is designed in the form of a cell wheel, the length of the scraper (50) being dimensioned such that it extends over the circumferential width of at least one cell of the cell wheel, the length of the scraper (50) in particular being dimensioned such that it always rests against the end face of a cell partition of the cell wheel.

4. Metering unit according to any of claims 1 to 3, **characterized in that** the metering wheel (44a, 44b, 44c, 44d) of the at least one metering insert (40a, 40b, 40c, 40d) is arranged in the region of its side opposite the scraper (50), with a gap being formed that has at least a slight distance from the insert housing (41).

5. Metering unit according to any of claims 1 to 4, **characterized in that** the drive motor (60) is arranged on the metering housing (20).

6. Metering unit according to any of claims 1 to 5, **characterized in that** a drive shaft (25) which extends into the receiving chamber (23) of the metering housing and is connected to the drive motor (60) is mounted on the metering housing (20), and can be coupled to the metering wheel (44a, 44b, 44c, 44d) of the at least one metering insert (40a, 40b, 40c, 40d) for conjoint rotation when the metering insert has been inserted into the receiving chamber (23) of the metering housing (20), the drive shaft (25) of the metering housing (20) in particular having a multi-edge outer profile (26) or multi-edge inner profile that is engaged with a complementary multi-edge inner profile (47) or multi-edge outer profile of the metering wheel (44a, 44b, 44c, 44d) of the at least one metering insert (40a, 40b, 40c, 40d) when the metering insert has been inserted into the receiving chamber (23) of the metering housing (20).

7. Metering unit according to claim 6, **characterized in that** the metering wheel (44a, 44b, 44c, 44d) of the at least one metering insert (40a, 40b, 40c, 40d) is rotatable by means of a handle (48) arranged in particular on the end face of the metering wheel (44a, 44b, 44c, 44d), in order to couple the metering wheel (44a, 44b, 44c, 44d) of the metering insert (40a, 40b, 40c, 40d) to the drive shaft (25) of the metering housing (20) for conjoint rotation.

8. Metering unit according to any of claims 1 to 7, **characterized in that** the metering housing (20) further comprises at least one stirrer shaft (29) in the region of its metering inlet (21), which stirrer shaft in particular is also connected to the drive motor (60).

9. Metering unit according to any of claims 1 to 8, **characterized in that**
- the receiving chamber (23) of the metering housing (20) is substantially cylindrical and the insert housing (41) of the at least one metering insert (40a, 40b, 40c, 40d) has a complementary, substantially cylindrical shape; or
- the receiving chamber (23) of the metering housing (20) tapers at least slightly from the outside to the inside and the insert housing (41) of the at least one metering insert (40a, 40b, 40c, 40d) has a complementary shape that tapers at least slightly from the outside to the inside.

10. Metering unit according to any of claims 1 to 9, **characterized in that** the insert housing (41) of the at least one metering insert (40a, 40b, 40c, 40d), which insert housing is complementary to the receiving chamber (23) of the metering housing (20), rests substantially dust-tightly against the receiving chamber (23) of the metering housing (20).

11. Metering unit according to any of claims 1 to 10, **characterized in that** the metering housing (20) has a quick-release fastener, in particular in the form of a manually operable lever (27), which is designed to lock the insert housing (41) of the at least one metering insert (40a, 40b, 40c, 40d) in the receiving chamber (23) of the metering housing (20) when the insert housing (41) has been inserted into the receiving chamber (23) of the metering housing (20).

12. Metering unit according to any of claims 1 to 11, **characterized in that** it comprises a plurality of metering inserts (40a, 40b, 40c, 40d) having different metering wheels (44a, 44b, 44c, 44d) which can be interchangeably inserted into the receiving chamber (23) of the metering housing (20).

13. Metering unit according to any of claims 1 to 12, **characterized in that** the inlet (42) of the insert housing (41) of at least one metering insert (40a, 40b, 40c, 40d) is provided with feed ramps (45) which are designed to feed the distribution material to the metering wheel (44a, 44b, 44c, 44d).

14. Metering unit according to any of claims 1 to 13, **characterized in that** the metering wheel (44a, 44b, 44c, 44d) of at least one metering insert (40a, 40b, 40c, 40d) has a plurality of metering wheel segments which are separated from one another in particular at the mutually facing axial ends thereof by means of an annular wall.

15. Distribution machine, in particular a seed spreader or fertilizer spreader, **characterized by** at least one metering unit according to any of claims 1 to 14.

## Revendications

1. Unité de dosage pour le dosage de produit à distribuer sous forme de poudre et/ou de particules, en particulier de semences et/ou d'engrais, pour une machine de distribution, comprenant :
- un boîtier de dosage (20) comportant une entrée de dosage (21) et comportant une sortie de dosage (22) et comportant un espace de réception (23) disposé entre l'entrée de dosage (21) et la sortie de dosage (22) pour la réception d'un insert de dosage (40a, 40b, 40c, 40d) ;
- au moins un insert de dosage (40a, 40b, 40c, 40d) comportant un boîtier d'insert (41) complémentaire de l'espace de réception (23) du boîtier de dosage (20), dans lequel boîtier d'insert au moins une roue de dosage (44a, 44b, 44c, 44d) est montée sans entraînement et lequel peut être introduit dans l'espace de réception (23) du boîtier de dosage (20) de telle sorte qu'une entrée (42) du boîtier d'insert (41) de l'insert de dosage (40a, 40b, 40c, 40d) correspond à l'entrée de dosage (21) du boîtier de dosage (20) et qu'une sortie (43) du boîtier d'insert (41) de l'insert de dosage (40a, 40b, 40c, 40d) correspond à la sortie de dosage (22) du boîtier de dosage (20) ; et
- un moteur d'entraînement (60) qui est conçu pour entraîner en rotation la roue de dosage (44a, 44b, 44c, 44d) de l'insert de dosage (40a, 40b, 40c, 40d) lorsque l'insert de dosage (40a, 40b, 40c, 40d) a été introduit dans l'espace de réception (23) du boîtier de dosage (20),
dans laquelle le boîtier d'insert (41) de l'au moins un insert de dosage (40a, 40b, 40c, 40d) présente un racleur (50) coopérant avec la roue de dosage (44a, 44b, 44c, 44d), lequel racleur est disposé entre l'entrée de dosage (21) et la sortie de dosage (22) du boîtier de dosage (20) lorsque l'insert de dosage (40a, 40b, 40c, 40d) a été introduit dans l'espace de réception (23) du boîtier de dosage (20), **caractérisée en ce que** le racleur (50) de l'au moins un insert de dosage (40a, 40b, 40c, 40d) est fabriqué en un matériau élastique et flexible et est fixé à son extrémité éloignée de la roue de dosage (44a, 44b, 44c, 44d), sensiblement dans la direction radiale de la roue de dosage (44a, 44b, 44c, 44d), à une paroi du boîtier d'insert (41), dans laquelle le racleur (50) est déformé élastiquement à son extrémité proche de la roue de dosage (44a, 44b, 44c, 44d), sensiblement dans la direction circonférentielle de la roue de dosage (44a, 44b, 44c, 44d).

2. Unité de dosage selon la revendication 1, **caractérisée en ce que** le racleur (50) de l'au moins un insert de dosage (40a, 40b, 40c, 40d) est fixé à son extrémité éloignée de la roue de dosage (44a, 44b, 44c, 44d), sensiblement horizontalement, à la paroi du boîtier d'insert (41).

3. Unité de dosage selon la revendication 1 ou 2, en ce que la roue de dosage (44a, 44b, 44c, 44d) de l'au moins un insert de dosage (40a, 40b, 40c, 40d) est réalisée sous la forme d'une roue cellulaire, dans laquelle la longueur du racleur (50) est dimensionnée de telle sorte qu'il s'étend sur la largeur circonférentielle d'au moins une cellule de la roue cellulaire, dans laquelle la longueur du racleur (50) est en particulier dimensionnée de telle sorte qu'il s'appuie toujours contre la face frontale d'une nervure de cellule de la roue cellulaire.

4. Unité de dosage selon l'une des revendications 1 à 3,
**caractérisée en ce que** la roue de dosage (44a, 44b, 44c, 44d) de l'au moins un insert de dosage (40a, 40b, 40c, 40d) est disposée dans la zone de son côté opposé au racleur (50) en formant un interstice avec un écart au moins minime par rapport au boîtier d'insert (41).

5. Unité de dosage selon l'une des revendications 1 à 4,
**caractérisée en ce que** le moteur d'entraînement (60) est disposé sur le boîtier de dosage (20).

6. Unité de dosage selon l'une des revendications 1 à 5,
**caractérisée en ce qu'**est monté sur le boîtier de dosage (20) un arbre d'entraînement (25) s'étendant dans son espace de réception (23) et en liaison avec le moteur d'entraînement (60), lequel arbre d'entraînement peut être accouplé de manière solidaire en rotation avec la roue de dosage (44a, 44b, 44c, 44d) de l'au moins un insert de dosage (40a, 40b, 40c, 40d) lorsque ce dernier a été introduit dans l'espace de réception (23) du boîtier de dosage (20), dans laquelle l'arbre d'entraînement (25) du boîtier de dosage (20) présente en particulier un profil extérieur polygonal (26) ou un profil intérieur polygonal qui est en prise avec un profil intérieur polygonal (47) ou un profil extérieur polygonal complémentaire à celui-ci de la roue de dosage (44a, 44b, 44c, 44d) de l'au moins un insert de dosage (40a, 40b, 40c, 40d) lorsque ce dernier a été introduit dans l'espace de réception (23) du boîtier de dosage (20).

7. Unité de dosage selon la revendication 6, **caractérisée en ce que** la roue de dosage (44a, 44b, 44c, 44d) de l'au moins un insert de dosage (40a, 40b, 40c, 40d) peut tourner au moyen d'une poignée (48), en particulier disposée sur le côté frontal de la roue de dosage (44a, 44b, 44c, 44d), afin d'accoupler de manière solidaire en rotation la roue de dosage (44a, 44b, 44c, 44d) de l'insert de dosage (40a, 40b, 40c, 40d) avec l'arbre d'entraînement (25) du boîtier de dosage (20).

8. Unité de dosage selon l'une des revendications 1 à 7,
**caractérisée en ce que** le boîtier de dosage (20) présente en outre, dans la zone de son entrée de dosage (21), au moins un arbre d'agitation (29) qui est en particulier également en liaison avec le moteur d'entraînement (60).

9. Unité de dosage selon l'une des revendications 1 à 8,
**caractérisée en ce que**
- l'espace de réception (23) du boîtier de dosage (20) est de forme sensiblement cylindrique et le boîtier d'insert (41) de l'au moins un insert de dosage (40a, 40b, 40c, 40d) possède une forme sensiblement cylindrique complémentaire de celui-ci ; ou
- l'espace de réception (23) du boîtier de dosage (20) se rétrécit au moins légèrement depuis l'extérieur vers l'intérieur et le boîtier d'insert (41) de l'au moins un insert de dosage (40a, 40b, 40c, 40d) possède une forme complémentaire de celui-ci se rétrécissant au moins légèrement depuis l'extérieur vers l'intérieur.

10. Unité de dosage selon l'une des revendications 1 à 9,
**caractérisée en ce que** le boîtier d'insert (41) de l'au moins un insert de dosage (40a, 40b, 40c, 40d), complémentaire de l'espace de réception (23) du boîtier de dosage (20), s'appuie contre l'espace de réception (23) du boîtier de dosage (20) de manière sensiblement étanche aux poussières.

11. Unité de dosage selon l'une des revendications 1 à 10,
**caractérisée en ce que** le boîtier de dosage (20) présente une fermeture rapide, en particulier sous la forme d'un levier (27) pouvant être actionné manuellement, qui est conçu pour bloquer le boîtier d'insert (41) de l'au moins un insert de dosage (40a, 40b, 40c, 40d) dans l'espace de réception (23) du boîtier de dosage (20) lorsque le boîtier d'insert (41) a été introduit dans l'espace de réception (23) du boîtier de dosage (20).

12. Unité de dosage selon l'une des revendications 1 à 11,
**caractérisée en ce qu'**elle comprend une pluralité d'inserts de dosage (40a, 40b, 40c, 40d) comportant différentes roues de dosage (44a, 44b, 44c, 44d) qui peuvent être introduits de manière interchangeable dans l'espace de réception (23) du boîtier de dosage (20).

13. Unité de dosage selon l'une des revendications 1 à 12,
**caractérisée en ce que** l'entrée (42) du boîtier d'insert (41) d'au moins un insert de dosage (40a, 40b, 40c, 40d) est pourvue de pentes d'amenée (45) qui sont conçues pour amener le produit à distribuer à la roue de dosage (44a, 44b, 44c, 44d).

14. Unité de dosage selon l'une des revendications 1 à 13,
**caractérisée en ce que** la roue de dosage (44a, 44b, 44c, 44d) d'au moins un insert de dosage (40a, 40b, 40c, 40d) présente une pluralité de segments de roue de dosage qui sont séparés les uns des autres, en particulier à leurs extrémités axiales se faisant face, au moyen d'une paroi annulaire.

15. Machine de distribution, en particulier semoir ou épandeur d'engrais, **caractérisée par** au moins une unité de dosage selon l'une des revendications 1 à 14.
